Europäisches Patentamt

European Patent Office

Office européen des brevets

(19)

(11) Publication number: **0 455 492 A1**

## (12) EUROPEAN PATENT APPLICATION

(21) Application number: 91303988.9

(22) Date of filing: 02.05.91

(51) Int. Cl.$^5$: **B01D 39/20**, D01D 1/10

(30) Priority: 03.05.90 GB 9010024

(43) Date of publication of application:
06.11.91 Bulletin 91/45

(84) Designated Contracting States:
DE ES FR IT

(71) Applicant: PALL CORPORATION
30 Sea Cliff Avenue
Glen Cove New York 11542 (US)

(72) Inventor: Troth, Harvey Graham, Dr.
42 Aberdare Avenue, Drayton
Portsmouth, Hants. PO6 2AV (GB)
Inventor: Buttery, Roger Alexander
37 Monks Orchard
Petersfield, Hants. GU32 2JD (GB)
Inventor: Gutman, Richard Guy, Dr.
29 Ferndale Road
Chichester, West Sussex PO19 4QJ (GB)

(74) Representative: Knott, Stephen Gilbert et al
MATHISEN, MACARA & CO. The Coach House
6-8 Swakeleys Road
Ickenham Uxbridge Middlesex UB10 8BZ (GB)

(54) Filters for polymer spinneret assemblies and their manufacture.

(57) A spinneret assembly comprises a body having a perforate plate forming a spinneret at one end through which molten polymer is extruded to form filaments. The body contains a filter upstream of the plate. The filter is formed from a plurality of layers of metal filter media including at least one layer of fibre metal and at least one layer of a sintered particulate metal. This is particularly effective in removing gels in the molten polymer and has extended life. The layers of metal filter media are held in a sleeve with the downstream layer being welded to the sleeve around its periphery so that the cross-section of the sleeve is not reduced at this point.

EP 0 455 492 A1

The invention relates to filters for polymer spinneret assemblies and to their manufacture.

Polymers such as nylon are commonly formed into filaments for the production of yarns by extruding the polymer through a spinneret assembly. A passage extends through a body of the assembly and has an inlet end for connection to a supply of molten polymer and an outlet end provided with a perforate plate forming the spinneret through which molten polymer is forced under pressure to form filaments. The filaments are subsequently cooled and collected.

It is a problem with such assemblies that the molten polymer does not always reach the spinneret plate with a uniform composition. For example, polymers such as nylon can form gels which will block the perforations in the plate and may contain extraneous particles which can also cause a blockage of the perforations. The presence of gels can also affect fibre quality. The perforations are very small and can be blocked easily. In order to overcome these difficulties, it has previously been common practice to include in the spinneret assembly, before the perforate plate, a filter formed by a sand pack. The sand pack is a layer of sand particles of predetermined particle size whose purpose is to filter out gels and extraneous particles and generally ensure that the melt reaching the perforate plate is of a uniform composition suitable for extrusion.

It is a problem with such sand filters that they have a comparatively limited life. The sand is also difficult to handle and so replacing such sand filters is difficult and time-consuming. Further, it is possible under high melt pressures for some gels to force a passage through the sand particles and so reach the perforate plate, despite the presence of the filter.

US-A-4,500,706 describes a method of producing resins for the commercial production of fibres in which a polymer is filtered through a filter which may be formed from a wire screen or from a wire screen with a layer of sand. US-A-4,126,560 describes a filter medium for removing contaminants, including gels, from molten polymers. The medium contains two layers of sintered metal fibres separated by a metallic wire screen with the screen acting as a holding chamber for gels.

According to a first aspect of the invention there is provided a polymer spinneret assembly comprising a body having a passage extending therethrough, the passage having an inlet end for connection to a supply of molten polymer and having an outlet end provided with a perforate plate forming a spinneret through which the molten polymer is forced under pressure to form filaments, a filter being provided between the inlet and outlet ends and including a plurality of layers, at least one layer being of a sintered particulate material.

According to a second aspect of the invention, there is provided a filter for a polymer spinneret assembly comprising an annular metal sleeve containing a plurality of layers of metal filter media, at least one of said layers being of fibre metal and at least one of said layers being of a sintered particulate material.

According to a third aspect of the invention, there is provided a method of manufacturing a filter for a polymer spinneret comprising forming an annular metal sleeve, inserting into said sleeve a plurality of layers of metal filter media, a successive plurality of said layers being of a fibre metal and at least one layer being of a sintered metal particulate, the metal layer which is to be the downstream layer in use being retained against movement relative to the sleeve.

The following is a more detailed description of an embodiment of the invention, by way of example, reference being made to the accompanying drawings in which:-

Figure 1 is a schematic cross-sectional view of a first spinneret assembly for polymers such as nylon.

Figure 2 is a schematic cross-sectional view of a second spinneret assembly for polymers such as nylon.

The first spinneret assembly comprises a body 10 of a metal such as cast iron with a passage 11 extending through the body 10. The passage 11 has an inlet end 12 and an outlet end 13. The body is formed in two parts 10a and 10b which are connected by bolts (not shown).

A perforate plate 15 closes the outlet end 13 and forms a spinneret. Each perforation has a wider diameter upstream end 16 a narrower diameter downstream end 17 and tapered sections 18 connecting the two ends 16,17. Distribution channels (not shown) are provided on the upstream surface of the perforate plate 15, for distributing molten polymer to the spinneret 15.

A filter 19 is arranged upstream of the perforate plate 15. The filter 19 comprises an annular metal sleeve 20 of, for example, stainless steel. The sleeve 20 contains a plurality of layers of metal filter media. The external diameter of the sleeve 20 is such as to match the internal diameter of the passage 11 so that the sleeve 20 is a tight fit in the passage 11 to prevent leakage between the exterior surface of the sleeve 20. The downstream end of the sleeve 20 rests on an annular seal 22 held by the body 20 to prevent leakage of molten polymer between the sleeve 20 and the body 10. The filter 19 can be removed and replaced by separating the two body parts 10a,10b.

The layers of filter media include an initial upstream layer 23, intermediate layers 24 and a final downstream layer 25. All the layers are in the shape of discs having a diameter that is substantially equal to the internal diameter of the sleeve 20 so that the discs are an interference fit in the sleeve 20. The initial and final layers 23,25 may have a typical thickness of about 1.6mm and the intermediate layers 24 may have a typical thickness of 0.7mm.

The initial layer 23 is formed from a sintered metal powder, such as a stainless steel metal powder. This initial layer 23 has a comparatively coarse absolute rating of 55 microns. The intermediate layers 24 are each formed by a multi-layered metal fibre depth filter medium with very high dirt-holding capacity. Fibre metal media are manufactured from a mat of random interwoven fine stainless steel fibres sintered to weld the fibres at their points of contact. The resultant medium has a high voidage of up to 85 per cent and higher dirt capacity and lower pressure drop at the same micron rating than media of porous sintered metal particles. There may be 33 successive layers but more or less layers may be provided. These layers may have a rating of 40 microns. Of course, a plurality of thinner layers of fibre metal may be replaced by one or more thicker layers of fibre metal.

The final layer 25 is similar to the initial layer 23 in that it is formed of sintered metal particles, for example stainless steel particles. It is, however, comparatively finer than the initial and intermediate layers 23,24 and may have an absolute rating of 15 microns.

The final layer 25 is comparatively much more rigid than the intermediate layers 24 and so serves to support the intermediate layers 24 and prevent their deformation under the loads imposed by the passage therethrough of molten polymer under pressure.

It will be appreciated, of course, that layers of metal filter medium may be arranged other than described above. For example, the rating of the intermediate layers 24 may be graded between the initial layer 23 and the final layer 25 so that the rating becomes finer as the intermediate layers 24 approach the final layer 25. In another example, the intermediate layers 24 may be formed by coarser layers interleaved with finer layers. It will also be appreciated that the intermediate layers 24 may include layers of fibre metal interleaved with one or more layers of sintered metal particles. In general, the number of layers and their performance characteristics will be chosen to suit the operating characteristics of the spinning machines in which they are used by giving, for example, a required pressure drop and the number of layers of fibre metal will be sufficient to ensure that gels are adequately removed.

The filter 19 may be manufactured in either one of the following ways.

In a first method of manufacture, a plain cylindrical stainless steel sleeve 20 is prepared having a required external diameter to match the passage 11 and an internal diameter that is constant along its length. The layers of metal filter media are then inserted into the sleeve in the required order with the final layer 25 being welded to the sleeve. The welding may, for example, be electron beam welding. The intermediate layers 24 may be compressed axially to about two thirds of their original volume.

In a second method, a stainless steel sleeve 20 is prepared as in the first method. The final layer 25 is then inserted into the sleeve and welded level with one end of the sleeve 20. The intermediate and initial layers 24,23 are then inserted in the required order, with the intermediate layers 24 being compressed to about two-thirds of their original volume. As compared with the first method, this method has the advantage that the intermediate layers 24 can be compressed after their insertion into the sleeve 20.

In both methods, the welding of the final layer 25 ensures the final layer 25 is effective over its whole area and that there is no reduction in the cross-sectional area of the sleeve 20. In addition, the weld ensures that no molten plastics by-passes the final layer 25.

If desired, the initial layer 23 may also be welded to the sleeve 20.

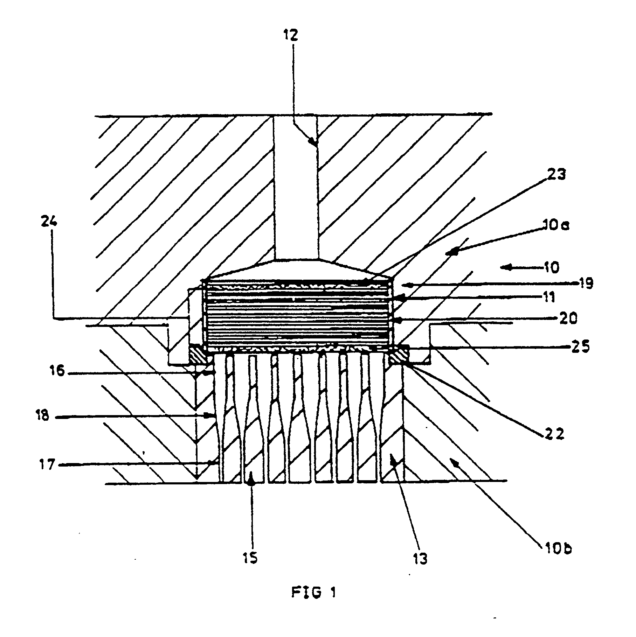

A spinneret assembly as described above with reference to Figure 1 was inserted into a known nylon spinning machine in which molten nylon under pressure is supplied to the inlet end 12 of the spinneret body 10. A comparison of the performance of the spinneret with the filter 17 was made with a spinneret with a standard sand pack and the following comparisons were noted.

1. The filaments produced by the spinneret described above with reference to Figure 1 were of higher quality than the filaments produced using the spinneret incorporating a sand pack.

2. The spinneret described above with reference to Figure 1 had good operational stability.

3. In the example tested, the lifetime of the spinneret described above with reference to Figure 1 was between 6 and 17 days as compared with an average lifetime of 4 days for the spinneret including a sand pack.

4. The pressure drop across the filter of a spinneret constructed on the principles described above with reference to Figure 1 was similar to that for a sand pack at approximately 130 bar. Thus the filter described above with reference to the drawings did not affect the operating characteristics of the nylon spinning machine adversely by introducing an altered pressure drop.

5. The air flow characteristics of the filter of the spinneret described above with reference to Figure 1 was, with a filter diameter of about 42 mm, such that at a flow rate of 5 litres per minute the pressure drop was 8 to 20 millibars. This is a typical air flow characteristic which is known to give good extrusion characteristics in the nylon spinning machine in which the spinneret was tested.

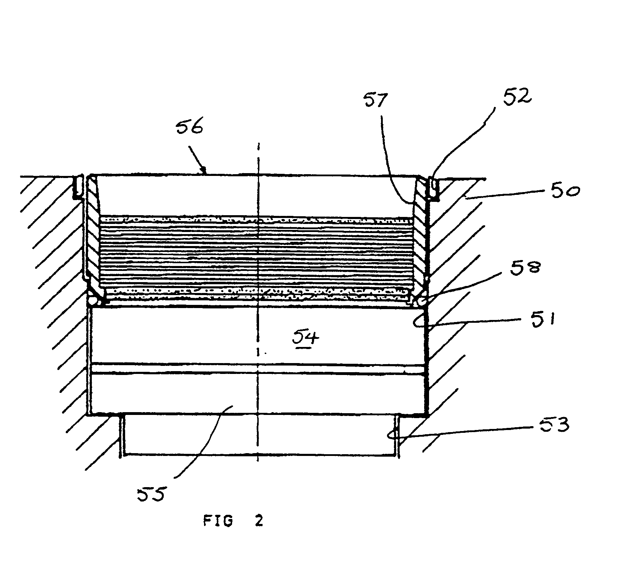

Referring next to Figure 2, the second spinneret assembly comprises a body 50 of a metal such as cast iron with a passage 51 extending through the body 50. The passage 51 has an inlet end 52 and an outlet end 53. A perforate breaker plate 54 and a spinneret 55 close the outlet end. The breaker plate 54 may be constructed as the plate is described above with reference to Figure 1.

A filter 56 is arranged upstream of the breaker plate 54. The filter 55 comprises an annular metal sleeve of, for example, an aluminium alloy. The sleeve 57 contains a plurality of layers of metal filter media. The external diameter of the sleeve 57 is such as to match the internal diameter of the passage 51 so that the sleeve 57 is a tight fit in the passage 51 to prevent leakage between the exterior surface of the sleeve 57 and the passage 51. The downstream end of the sleeve 57 abuts an annular seal 58 arranged between the sleeve 57 and the breaker plate 54 to prevent leakage of polymer.

The layers of filter media are in the shape of discs fitted in the sleeve 57 and prevented from being forced out of the sleeve by engagement of the downstream discs with an annular step 59 at the downstream end of the sleeve 57. The discs are formed either from a sintered stainless steel powder, as described above with reference to Figure 1, or from fibre metal as also described above with reference to Figure 1.

Two exemplary arrangements of such discs are as follows, the order of the discs being given from the upstream end of the sleeve 57 to the downstream end of the sleeve 57.

EXAMPLE 1

| Disc type | No. of Discs | Rating ($\mu$m) |
|---|---|---|
| Sintered Stainless Steel Powder | 1 | 40 |
| Sintered Stainless Steel Powder | 8 | 25 |
| Fibre Metal | 7 | 25 |
| Sintered Stainless Steel Powder | 2 | 15 |

EXAMPLE 2

| Disc type | No. of Discs | Rating ($\mu$m) |
|---|---|---|
| Sintered Stainless Steel Powder | 1 | 40 |
| Fibre Metal | 7 | 40 |
| Fibre Metal | 19 | 25 |
| Sintered Stainless Steel Powder | 2 | 15 |

The filter described above with reference to Figure 2 may be manufactured in any of the ways described above with reference to Figure 1.

The spinneret assembly described above with reference to Figure 2 was inserted into a known nylon spinning machine in which molten nylon under pressure is supplied to the inlet end 52 of the spinneret body 50. In comparison with the performance of the spinneret with a standard sand pack, the spinneret exhibited generally the same advantages as noted above in relation to the spinneret assembly of Figure 1. With a filter diameter of 80mm and at a flow rate of 12 litres per minute, the air flow rate was 30 millibars for the spinneret of Example 1 and 19 millibars for the spinneret of Figure 2. These flow characteristics are known to give good extrusion characteristics in the nylon spinning machine in which the spinneret was tested.

In general, the performance of the both of spinnerets described above with reference to the drawings were considered to be much superior to that of a spinneret including a sand pack, as judged by those with knowledge of nylon fibre extrusion. It is believed to be related to the shearing action produced by the fibres, which is particularly effective in dispersing gels, particularly in comparison with filter media of sintered particles.

The exact manner in which the filters described above with reference to the drawings operate is not known exactly but the following explanation is offered without prejudice to the invention.

It is believed that, as well as the normal filtering action of the sintered (and therefore dimensionally fixed) random stainless steel fibre filters, there is an effect of slicing the gels into smaller and smaller particles as they pass through the successive plurality of layers of fibre metal. When the gels become very much smaller than the final fibre diameter they do not affect significantly the quality of the fibre.

## Claims

1. A polymer spinneret assembly comprising a body (10;50) having a passage (12;51) extending therethrough, the passage having an inlet end (12;52) for connection to a supply of molten polymer and having an outlet end (13;53) provided with a perforate plate forming a spinneret through which the molten polymer is forced under pressure to form filaments, a filter (19;56) being provided between the inlet and outlet ends, and including a plurality of layers, at least one layer being of a fibre metal and at least one layer being of a sintered particulate metal.

2. A polymer spinneret assembly as claimed in claim 1 wherein the filter (19;56) includes two or more layers of a fibre metal arranged in a stack.

3. A polymer spinneret assembly as claimed in claim 1 or claim 2 wherein the initial and final layers in the direction of flow of the polymer are of a sintered particulate metal and the intermediate layers are of a fibre metal.

4. A polymer spinneret assembly as claimed in claim 3 wherein the initial layer of the sintered particulate metal has a rating which is coarser than the rating of the intermediate layers.

5. A polymer spinneret assembly as claimed in either claim 3 or claim 4 wherein the final layer of the sintered particulate metal has a rating which is finer than the rating of the intermediate layers.

6. A polymer spinneret assembly as claimed in any one of claims 3 to 5 wherein the rating of each of the intermediate layers is the same.

7. A polymer spinneret assembly as claimed in any one of claims 3 to 5 wherein the rating of each of the intermediate layers is different, with the layers being successively finer in the direction of flow of the polymer.

8. A polymer spinneret assembly as claimed in any one of claims 3 to 5 wherein the intermediate layers comprise layers of a coarser rating and layers of a finer rating.

9. A polymer spinneret assembly as claimed in any one of claims 1 to 8 wherein the air flow characteristics of the filter are such as to provide a flow rate of 5 litres per minute at a pressure drop across the filter of between 8 and 20 millibars and with a filter diameter of 42 mm.

10. A polymer spinneret assembly as claimed in any one of claims 1 to 8 wherein the air flow characteristics of the filter are such as to provide a flow rate of 12 litres per minute at a pressure drop across the filter of between 19 and 30 millibars at a filter diameter of 80mm.

11. A filter for a polymer spinneret assembly comprising an annular metal sleeve (20;57) containing a plurality of layers of metal filter media, at least one of said layers being of fibre metal and at least one of said layers being of a sintered particulate metal.

12. A filter for a polymer spinneret assembly as claimed in claim 11 wherein the casing (10;50) has an interior surface of constant diameter along the length thereof and wherein the one of said layers that is to be the downstream layer in the filter is arranged level with an end of the sleeve (20;57) and is welded to the sleeve around the periphery thereof to retain the layers in the sleeve.

13. A filter for a polymer spinneret assembly as claimed in claim 11 or claim 12 wherein said layers include a downstream layer formed from sintered particulate metal having a finer rating than the remaining layers.

14. A filter for a polymer spinneret assembly as claimed in any one of claims 11 to 13 wherein the layers are formed as discs that are an interference fit in the interior of the sleeve.

15. A filter for a polymer spinneret assembly as claimed in claim 14 wherein the layers between the end layers are compressed in an axial direction.

16. A method of manufacturing a filter for a polymer spinneret assembly comprising forming an annular sleeve (20;57) of metal, inserting into said sleeve a plurality of layers of metal filter media, at least one of said layers being of a fibre metal and at least one of said layers being of a sintered particulate metal, the layer which is to be the downstream layer in use being retained against axial movement relative to the sleeve.

17. A method of manufacturing a filter for a polymer spinneret assembly as claimed in claim 16 wherein the sleeve (20;57) has an internal diameter that is constant along the length thereof, the downstream layer being welded to the sleeve around the periphery thereof to retain the layer against said axial movement.

18. A method of manufacturing a filter for a polymer spinneret assembly as claimed in claim 17 wherein the downstream layer is inserted into the sleeve (20;57) initially and is then welded to the sleeve (20;57), the remaining layers of metal filter media then being inserted into the sleeve.

19. A method of manufacturing a filter for a polymer spinneret assembly as claimed in claim 17 wherein all the layers of metal filter media are inserted into the sleeve (20;57), the downstream layer then being arranged at one end of the sleeve and then being welded to the sleeve around the periphery thereof.

20. A method of manufacturing a filter for a polymer spinneret assembly as claimed in any one of claims 16 to 19 wherein the welding process is an electron beam welding process.

21. A method of manufacturing a filter for a polymer spinneret assembly as claimed in any one of claims 16 to 20 wherein the at least one fibre metal layer is compressed in an axial direction in the layers of metal filter media.

22. A method of manufacturing a filter for a polymer spinneret assembly as claimed in claim 16 wherein said retention is by engagement of the downstream layer with an annular step in the sleeve.

FIG 1

FIG 2

**European Patent Office**

## EUROPEAN SEARCH REPORT

Application Number

EP 91 30 3988

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 052 284   (HAVER & BOECKER)<br>--- | | B 01 D  39/20<br>D 01 D   1/10 |
| A | EP-A-0 220 324   (SMC CORP.)<br>* Claims 6-8; pages 5-10 *<br>--- | | |
| A | EP-A-0 163 742   (K. MURAKAMI)<br>* Pages 7,9-10,13,19 *<br>--- | | |
| A | US-A-4 494 921   (L.H. SOWELL)<br>* Column 2, lines 13-25; figure 1 *<br>----- | | |
| | | | TECHNICAL FIELDS SEARCHED (Int. Cl.5)<br><br>B 01 D  39/00<br>B 01 D   1/00 |

The present search report has been drawn up for all claims

| Place of search | Date of completion of the search | Examiner |
|---|---|---|
| THE HAGUE | 02-08-1991 | DEVISME F.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO FORM 1503 03.82 (P0401)